# FASCICULE DE BREVET EUROPEEN

(11) **EP 1 314 839 B1**
(45) Date de publication et mention de la délivrance du brevet: **25.01.2006**
(21) Numéro de dépôt: 02292913.7
(22) Date de dépôt: 25.11.2002
(51) Int. Cl.: E05B 41/00, B64D 29/08, E05C 19/14

(54) **Nacelle de moteur d'avion avec dispositif indicateur de défaut de fermeture**
Flugzeugmotorgondel mit Verschlussfehleranzeiger
Aircraft engine cowl panel with closure default indicator

(30) Priorité: 27.11.2001 FR 0115300
(43) Date de publication de la demande: 28.05.2003
(73) Titulaire: AIRBUS France, 31060 Toulouse Cedex 03 (FR)
(72) Inventeur: Porte, Alain, 31770 Colomiers (FR)
(74) Mandataire: Simonnet, Christine

(56) Documents cités:
- EP-A- 1 099 629
- US-A- 4 086 670
- US-A- 4 365 775
- US-A- 4 613 099
- US-A- 4 679 750

## Description

### DOMAINE TECHNIQUE

L'invention concerne une nacelle de moteur d'avion comprenant deux capots de soufflante équipés de moyens de verrouillage constitués d'une pluralité de mécanismes de verrouillage ainsi que d'un dispositif indicateur de défaut de fermeture desdits moyens de verrouillage.

Un tel dispositif peut notamment être utilisé afin d'informer immédiatement le personnel au sol d'un défaut de fermeture de ces capots.

### ETAT DE LA TECHNIQUE ANTERIEURE

Les nacelles des moteurs d'avion sont habituellement équipées de capots, dont l'ouverture permet d'accéder, lorsque l'avion est au sol, à différents équipements, systèmes, etc., pour en assurer la maintenance. Lorsque l'avion est en vol, les capots sont fermés et présentent une forme telle qu'ils assurent la continuité aérodynamique du moteur dans son ensemble.

De façon plus précise, la nacelle d'un turboréacteur à double flux est généralement équipée d'au moins une paire de capots de soufflante, respectivement de droite et de gauche, placés autour de la soufflante du moteur. Chacun des capots présente en section approximativement la forme d'un C selon un plan transversal perpendiculaire à l'axe longitudinal du moteur. Une charnière permet d'articuler le bord supérieur de chacun des capots sur la partie haute du moteur. Grâce à cet agencement, il est possible d'accéder aux différents équipements du moteur, notamment pour en effectuer la maintenance, en relevant les capots.

Par ailleurs, les bords inférieurs des capots sont équipés de mécanismes de verrouillage prévus pour verrouiller les capots dans leur position fermée lorsque ces mécanismes sont actionnés. Ces mécanismes de verrouillage comportent généralement une partie mâle et une partie femelle montées sur les bords inférieurs respectifs des capots, de façon à pouvoir coopérer entre elles lorsque les capots sont fermés.

En vol, plusieurs facteurs engendrent une force centrifuge s'exerçant sur les capots. A titre d'exemples, on peut citer l'écoulement aérodynamique sur les capots, des surpressions éventuelles provoquées par l'éclatement de tuyauteries internes au moteur, ou encore la présence de dispositifs de ventilation.

Par conséquent, les mécanismes de verrouillage permettent de s'opposer à cette force afin de maintenir les capots de soufflante solidaires du moteur. Pour des raisons de sécurité, il est généralement prévu un nombre de mécanismes supérieur au nombre de mécanismes nécessaires pour assurer le passage des efforts générés par cette force centrifuge.

Le document US-A-4 531 769 concerne un mécanisme de verrouillage perfectionné prévu pour assurer la fermeture de deux capots entourant un moteur d'avion. Ce mécanisme, du type à genouillère, comprend un crochet principal articulé sur le bord inférieur d'un premier capot, de façon à pouvoir pénétrer dans une ouverture complémentaire liée à l'autre capot. La position du crochet principal est sécurisée par l'utilisation d'un deuxième crochet. Le verrouillage du mécanisme est commandé en appuyant sur une poignée.

Lorsqu'un tel mécanisme de verrouillage est implanté sur un moteur d'avion, il peut arriver que l'opérateur chargé de fermer les capots oublie d'effectuer le verrouillage ou que celui-ci soit mal réalisé. En effet, lorsqu'un mécanisme de verrouillage tel que celui qui est décrit dans le document US-A-4 531 769 est utilisé, il est possible d'actionner la poignée dans le sens de la fermeture alors que le crochet n'est pas engagé dans l'ouverture complémentaire liée à l'autre capot. Dans ce cas, comme dans l'hypothèse où l'opérateur oublierait de manoeuvrer les mécanismes de verrouillage après avoir abaissé les capots, il n'est pratiquement pas possible de voir que le verrouillage a été omis ou imparfaitement exécuté. En effet, en raison de leur masse élevée, les capots se mettent automatiquement en place par gravité et leurs bords inférieurs ne dépassent pratiquement pas de l'entrée d'air. De plus, les mécanismes de verrouillage existants ne possèdent actuellement pas de parties réellement saillantes permettant d'indiquer à l'opérateur un défaut de fermeture.

Dans le document EP-A-0 596 070, ce problème a été résolu en montant sur le bord inférieur de l'un des deux capots un bras pivotant ou coulissant qui pend de manière visible sous le moteur lorsque les deux capots sont abaissés mais non verrouillés. L'indication d'un défaut de fermeture peut encore être améliorée en ajoutant un fanion à l'extrémité du bras pivotant ou coulissant.

Selon ce document EP-A-0 596 070, le verrouillage des capots ne peut être effectué qu'après que l'opérateur ait remonté manuellement le bras afin de le loger sur un réceptacle prévu à cet effet. Lorsque le verrouillage est effectué, une broche liée au capot opposé pénètre dans le bras pour le maintenir dans sa position escamotée. Lorsque les capots sont déverrouillés, un ressort amène automatiquement le bras dans sa position en saillie, visible de l'extérieur.

Cependant, cet indicateur présente un certain nombre d'inconvénients.

En premier lieu, dans le cas le plus fréquent où le moteur est installé sous l'aile de l'avion, le mécanisme de verrouillage des capots est situé sous le moteur, dans un endroit très proche du sol et donc d'accès malaisé. Lorsque l'opérateur ouvre ou referme les capots, il doit s'accroupir pour manoeuvrer les mécanismes de verrouillage. Le bras ajouté au mécanisme de verrouillage selon le document EP-A-0 596 070 constitue alors une pièce saillante qui vient s'ajouter à d'autres parties contondantes du moteur risquant de blesser l'opérateur.

Par ailleurs, lorsqu'on referme les capots, l'indicateur décrit dans le document EP-A-0 596 070 impose à l'opérateur de remonter le bras tout en verrouillant les capots. Dans la position dans laquelle il se trouve, cette opération est particulièrement fastidieuse et difficile à réaliser.

En outre, l'indicateur décrit dans le document EP-A-0 596 070 complique sensiblement les mécanismes de verrouillage existants, puisqu'il nécessite un alignement entre la broche assurant le blocage du bras en position escamotée et le trou formé dans le bras pour recevoir cette broche. Cette opération peut se révéler fastidieuse, compte tenu de l'usure et du jeu que prendront les pièces lors de leur utilisation.

De plus, l'indicateur décrit dans le document EP-A-0 596 070 n'est pas en mesure d'indiquer la présence d'un défaut de fermeture de chacun des mécanismes servant à verrouiller les capots du moteur.

En effet, l'indicateur est susceptible de se déplacer de sa position escamotée vers sa position saillante, uniquement dans les cas où aucun des mécanismes de verrouillage n'a été enclenché.

Cependant, en vol, pour assurer le maintien des capots l'un par rapport, il est habituellement nécessaire de prévoir une pluralité de mécanismes de verrouillage, afin d'éviter l'arrachement des capots du moteur.

Or dans le document présenté ci-dessus, il suffit que l'un quelconque des mécanismes de verrouillage soit actionné pour interdire à l'indicateur d'avertir d'un défaut de fermeture, sans que l'on se préoccupe de l'état de l'ensemble des autres mécanismes. Ceci est particulièrement préjudiciable dans le sens où l'on pourrait aboutir à des situations dans lesquelles le personnel au sol ne serait pas averti d'un verrouillage insuffisant pour assurer le maintien des capots en vol.

Le document EP-A-1 099 629 décrit un indicateur de défaut de fermeture de moyens de verrouillage qui comprend des moyens de butée escamotables aptes à maintenir automatiquement les deux capots écartés l'un de l'autre, lors d'un passage de ces capots d'une position ouverte à une position fermée.

Bien que remédiant aux inconvénients principaux de la réalisation décrite dans le document EP-A-0 596 070, cet indicateur présente néanmoins un inconvénient similaire à un des inconvénients afférents à ce document EP-A-0 596 070.

Cet inconvénient est celui lié à l'incapacité de l'indicateur à avertir lors d'un défaut de fermeture survenant sur l'un quelconque des mécanismes de verrouillage des moyens de verrouillage. En effet, une fois que l'indicateur à été manuellement actionné pour permettre la fermeture des moyens de verrouillage, cet indicateur n'est plus capable de renseigner sur l'état des différents mécanismes de verrouillage.

Enfin, dans le document EP-A-1 099 629, l'indicateur ne permet pas d'obtenir un écartement des capots suffisamment visible pour que le personnel au sol puisse déceler un défaut de fermeture de ces capots. Par conséquent, l'avion peut parvenir à décoller sans que les capots du moteur soient correctement fermés et verrouillés.

Le document US-A-4 365 775 décrit une nacelle de moteur d'avion comprenant deux capots de soufflante équipés d'un moyen de verrouillage ainsi que d'un dispositif indicateur de défaut de fermeture dudit moyen de verrouillage, ledit dispositif indicateur comprenant un corps apte à occuper, par rapport auxdits capots, une position escamotée ainsi qu'une position saillante avertissant d'un défaut de fermeture. Le moyen de verrouillage dispose d'une poignée constituant une butée pour le corps tant que cette poignée est dans sa position ouverte.

### EXPOSÉ DE L'INVENTION

L'invention a donc pour but de présenter une nacelle de moteur d'avion comprenant deux capots de soufflante équipés de moyens de verrouillage constitutés d'une pluralité de mécanismes de verrouillage ainsi que d'un dispositif indicateur de défaut de fermeture, ce dispositif indicateur remédiant au moins partiellement aux inconvénients cités ci-dessus relatifs aux indicateurs de l'art antérieur.

Plus précisément, la présente invention a pour but de proposer une nacelle de moteur d'avion avec un dispositif indicateur permettant d'aboutir à un avertissement plus fiable et plus performant que celui généré par les indicateurs de l'art antérieur.

Pour ce faire, l'invention a pour objet une nacelle de moteur d'avion ayant les caractéristiques de la revendication 1.

Lorsque les deux capots de soufflante sont écartés l'un par rapport à l'autre, un défaut de fermeture est indiqué visuellement par l'intermédiaire du corps du dispositif indicateur. Par ailleurs, le dispositif indicateur selon l'invention est conçu de telle sorte que lorsque l'un quelconque des mécanismes de verrouillage lui étant directement associé n'est pas correctement actionné, le corps du dispositif avertissant d'un défaut de fermeture ne peut occuper une position escamotée, et force par conséquent un opérateur à verrouiller correctement chacun des mécanismes de verrouillage associés non actionné. Ainsi, tant que chaque mécanisme de verrouillage associé au dispositif indicateur n'est pas verrouillé de façon convenable, le corps du dispositif ne pourra adopter une position escamotée dans laquelle il recouvre au moins partiellement chacun de ces mécanismes associés, et sera cantonné dans une position saillante d'avertissement de défaut de fermeture.

De manière avantageuse, bien que le corps du dispositif indicateur puisse pendre sous un moteur d'avion comme cela est décrit dans le document EP-A-0 596 070, sa forme et ses dimensions peuvent être adaptées pour lui permettent d'être facilement vu par un opérateur effectuant diverses tâches à proximité du moteur.

Chacun des mécanismes de verrouillage non actionné et apte à être au moins partiellement recouvert par le corps du dispositif constitue une butée pour ce corps, lors d'un déplacement de sa position saillante vers sa position escamotée.

De façon préférentielle, dans sa position escamotée, le corps du dispositif recouvre au moins partiellement chacun des mécanismes de verrouillage constituant les moyens de verrouillage, et est en appui contre au moins un des deux capots. De cette manière, en associant l'ensemble des mécanismes de verrouillage au dispositif indicateur, ce dernier est alors en mesure d'indiquer un défaut de fermeture lorsque l'un quelconque des mécanismes constituant les moyens de verrouillage n'est pas correctement actionné, renforçant ainsi la sécurité apportée par un tel dispositif.

Selon un mode préféré de réalisation de l'invention, le corps du dispositif est monté de manière librement articulée à une extrémité de l'un des deux capots de soufflante. De plus, ce dispositif indicateur comprend des moyens de fermeture aptes à fixer le corps du dispositif sur l'autre des deux capots de soufflante.

Le corps du dispositif peut alors comprendre une première partie destinée à recouvrir chacun des mécanismes de verrouillage lorsque le corps du dispositif est dans sa position escamotée, et une seconde partie destinée à avertir d'un défaut de fermeture lorsque le corps du dispositif est dans sa position saillante. Bien entendu, lorsque le dispositif indicateur n'est pas associé à la totalité des mécanismes de verrouillage constituant les moyens de verrouillage mais uniquement à un certain nombre d'entre eux supérieur ou égal à deux, la première partie du corps du dispositif est alors destinée à recouvrir seulement les mécanismes de verrouillage concernés.

Selon un autre mode de réalisation préféré de l'invention, le corps du dispositif est monté de manière librement articulée sur une partie externe aux deux capots de soufflante. En outre, le dispositif comprend des moyens de fermeture aptes à fixer le corps du dispositif sur au moins l'un de ces deux capots de soufflante.

Dans ce cas, le corps du dispositif est destiné d'une part à recouvrir chacun des mécanismes de verrouillage lorsque le corps du dispositif est dans sa position escamotée, et d'autre part à avertir d'un défaut de fermeture lorsque le corps du dispositif est dans sa position saillante.

Enfin, le corps du dispositif est apte à recouvrir un nombre prédéterminé supérieur ou égal à deux de mécanismes de verrouillage, ce nombre étant suffisant pour reprendre les efforts générés lors d'un écoulement aérodynamique rencontré en situation de vol. Ainsi, le dispositif indicateur peut s'appliquer avantageusement à un nombre prédéterminé et restreint de mécanismes de verrouillage, selon les besoins de sécurité rencontrés.

D'autres caractéristiques et avantages de l'invention apparaîtront dans la description non limitative ci-dessous.

### BRÈVE DESCRIPTION DES DESSINS

La description sera faite au regard des dessins annexés parmi lesquels :
- la figure 1 représente une vue schématique de face d'un turboréacteur dont la nacelle est munie d'un dispositif indicateur selon un premier mode de réalisation préféré de l'invention, le corps du dispositif étant dans sa position saillante d'avertissement et les capots de soufflante de la nacelle étant rabattus,
- la figure 2 représente une vue schématique en perspective d'un turboréacteur dont la nacelle est munie d'un dispositif indicateur selon le premier mode de réalisation préféré de l'invention, le corps du dispositif étant dans sa position saillante d'avertissement et les capots de soufflante de la nacelle étant rabattus,
- la figure 3 représente une vue partielle, de dessous, à plus grande échelle, d'une nacelle d'un turboréacteur munie d'un dispositif indicateur selon le premier mode de réalisation préféré de l'invention, le corps du dispositif étant dans sa position escamotée,
- la figure 4 représente une vue partielle en coupe prise selon la ligne A-A de la figure 3,
- la figure 5 représente une vue schématique en perspective d'un turboréacteur dont la nacelle est munie d'un dispositif indicateur selon un second mode de réalisation préféré de l'invention, le corps du dispositif étant dans sa position saillante d'avertissement et les capots de soufflante de la nacelle étant rabattus,
- la figure 6 représente une vue partielle, de dessous, à plus grande échelle, d'une nacelle d'un turboréacteur munie d'un dispositif indicateur selon le second mode de réalisation préféré de l'invention, le corps du dispositif étant dans sa position escamotée, et
- la figure 7 représente une vue partielle en coupe de face, d'une nacelle d'un turboréacteur munie d'un dispositif indicateur selon un troisième mode de réalisation préféré de l'invention, le corps du dispositif étant dans sa position escamotée.

### EXPOSÉ DÉTAILLÉ DE MODES DE RÉALISATION PRÉFÉRÉS

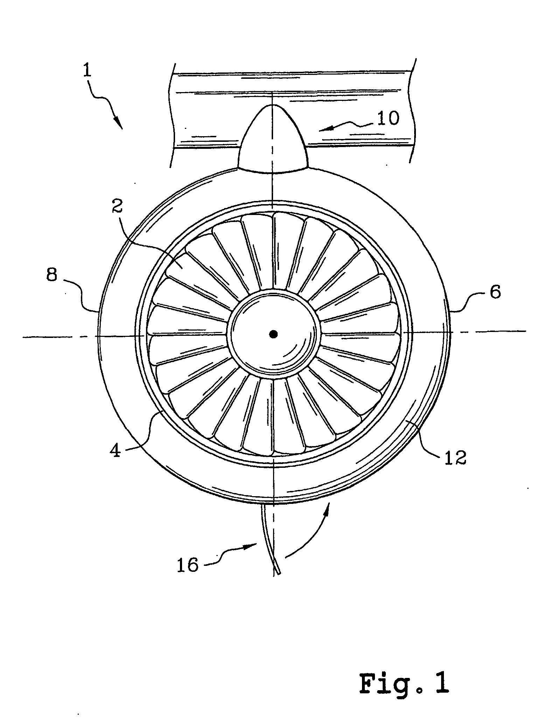

Comme on peut le voir sur la figure 1, une nacelle 1 d'un turboréacteur est habituellement délimitée vers l'intérieur, au droit d'une soufflante 2, par un carter de soufflante 4. De plus, la nacelle 1 est également délimitée vers l'extérieur, par deux capots de soufflante 6 et 8 constituant respectivement le capot gauche et le capot droit. Chacun des capots gauche 6 et droit 8 présente sensiblement la forme d'un C ou d'un demi-cercle, en section transversale selon un plan perpendiculaire à l'axe longitudinal du moteur.

Les capots 6 et 8 sont chacun articulés sur un mât 10 par lequel le moteur est suspendu, sous une voilure de l'avion. Plus précisément, le bord supérieur de chacun des capots 6 et 8 est relié au mât 10, au niveau d'une partie supérieure du moteur, par une charnière (non représentée) dont l'axe est sensiblement parallèle à l'axe longitudinal du moteur. Cet agencement particulier permet de relever chacun des capots 6 et 8 afin d'accéder à différents équipements (non représentés) du moteur, traditionnellement implantés dans un espace annulaire 12 délimité à l'intérieur de la nacelle 1 entre le carter de soufflante 2 et les capots gauche 6 et droit 8.

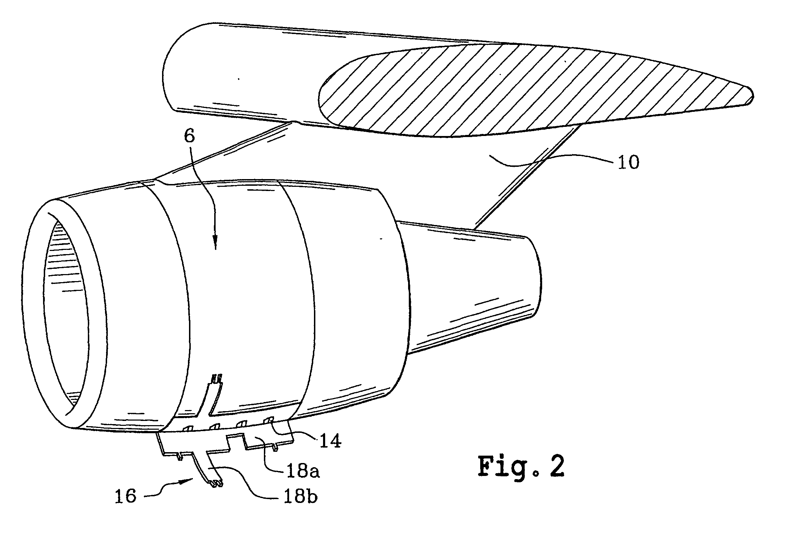

Lorsque les capots 6 et 8 sont fermés, ils sont normalement verrouillés par des moyens de verrouillage, ces moyens de verrouillage comprenant une pluralité de mécanismes de verrouillage 14, représentés schématiquement sur la figure 2. Ces mécanismes 14 sont du type mécanisme à genouillère ou analogues, comparables au mécanisme décrit dans le document US-A-4 531 769, interposés entre les bords inférieurs des capots 6 et 8.

Afin d'éviter qu'un opérateur oublie d'actionner ces moyens de verrouillage ou les actionne de façon imparfaite, on adjoint à la nacelle 1 un dispositif indicateur de défaut de fermeture des moyens de verrouillage, ce dispositif indicateur étant désigné de façon générale par la référence numérique 16.

Il est tout d'abord à préciser que contrairement à l'art antérieur, le dispositif indicateur 16 s'applique à un nombre prédéterminé de mécanismes de verrouillage 14 appartenant aux moyens de verrouillage, ce nombre pouvant varier de deux à la totalité des mécanismes constituant les moyens de verrouillage. De plus, on notera que le nombre prédéterminé de ces mécanismes 14 dépend des conditions environnantes, et peut être adapté selon les besoins rencontrés. De manière générale, on peut indiquer que le nombre total de mécanismes 14 est surdimensionné, afin de pouvoir faire face à d'éventuelles défaillances de l'un ou de plusieurs de ces mécanismes de verrouillage 14 en cours de vol.

Selon un premier mode de réalisation préféré de l'invention et en référence aux figures 1 et 2, on voit un dispositif indicateur 16 de défaut de fermeture de moyens de verrouillage constitués d'une pluralité de mécanismes de verrouillage 14, ces derniers étant interposés entre le capot de soufflante gauche 6 et le capot de soufflante droit 8 de la nacelle 1. Plus précisément, dans ce premier mode de réalisation préféré de l'invention, le dispositif indicateur 16 s'applique à l'ensemble des mécanismes de verrouillage 14 constituant les moyens de verrouillage des capots 6,8 de la nacelle 1, alors que comme il l'a été rappelé ci-dessus, le dispositif indicateur 16 pourrait également s'appliquer à un nombre restreint de ces mécanismes de verrouillage 14, toujours supérieur ou égal à deux.

Le dispositif indicateur 16 comprend un corps 18 comportant une première partie 18a et une seconde partie 18b, les première et seconde parties 18a,18b étant solidaires l'une de l'autre, et réalisées indifféremment de façon monobloc ou en deux parties distinctes assemblées rigidement entre elles, par l'intermédiaire de moyens du type soudage. La première partie 18a du corps 18 est de forme sensiblement rectangulaire dont le côté le plus long s'étend selon une direction parallèle à l'axe longitudinal du moteur, tandis que la seconde partie 18b du corps 18, également de forme sensiblement rectangulaire, a un côté le plus long qui s'étend dans une direction sensiblement perpendiculaire à l'axe longitudinal du moteur. De plus, il est indiqué que les première et seconde parties 18a et 18b prennent préférentiellement chacune la forme d'une simple plaque de faible épaisseur.

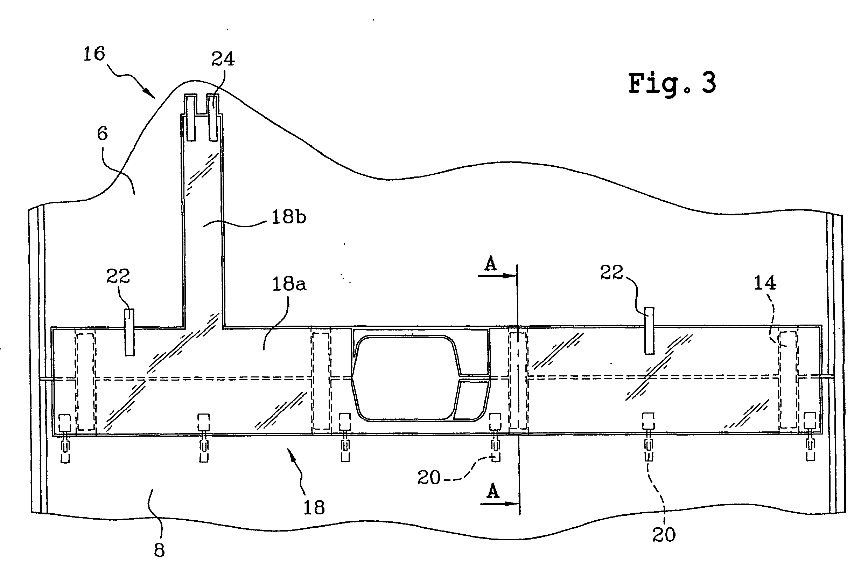

Le dispositif indicateur 16 est muni de charnières 20 ou d'éléments analogues permettant de monter de manière librement articulée la première partie 18a du corps 18 sur l'un des capots 6 et 8. Comme représenté sur les figures 1 à 3, la suite de la description de ce mode de réalisation préféré sera faite dans le cas où les charnières 20 sont fixées sur une partie inférieure du capot droit 8, l'axe de ces charnières 20 étant sensiblement parallèle à l'axe longitudinal du moteur.

Le dispositif indicateur 16 comprend également des moyens de fermeture 22,24, ces moyens de fermeture étant susceptibles de solidariser le corps 18 avec les capots 6,8. Les moyens de fermeture 22,24 comprennent une pluralité de premiers mécanismes 22 destinés à coopérer avec la première partie 18a du corps 18, ainsi qu'une pluralité de seconds mécanismes 24 destinés à coopérer avec la seconde partie 18b de ce même corps 18. Notons que les premiers et seconds mécanismes de fermeture 22,24 sont du même type que les mécanismes de verrouillage 14, et préférablement de dimensions inférieures.

Le dispositif indicateur 16 est apte à fonctionner de la manière suivante.

Lorsque les deux capots de soufflante 6 et 8 sont dans une position ouverte, et par conséquent écartés l'un de l'autre (position non représentée), le corps 18, librement articulé par sa première partie 18a, pend sous la partie inférieure du capot droit 8, de façon à indiquer par l'intermédiaire de sa seconde partie 18b un défaut de fermeture des mécanismes de verrouillage 14. Il est à noter que la forme et les dimensions de cette seconde partie 18b sont adaptées pour que le corps 18 puisse être facilement visible par un opérateur se trouvant à proximité de la nacelle 1. A ce titre, il est précisé que chacun des éléments 18a et 18b du corps 18 dispose d'une surface largement supérieure à celle d'un mécanisme de verrouillage 14.

Lors d'opérations du type opérations de manutention sur le moteur, il est possible de prévoir des moyens (non représentés) permettant de relever le corps 18 pendant sous le capot droit 8, afin qu'il ne présente plus de danger pour l'opérateur se situant à proximité. A titre d'exemple, on pourra utiliser une bielle apte à se fixer sur le capot droit 8 de la nacelle 1.

Une fois les diverses opérations terminées, les capots de soufflante 6 et 8 sont rabattus de manière à être fixés l'un à l'autre. La position des capots gauche 6 et droit 8 est alors similaire à celle représentée sur les figures 1 et 2.

Par ailleurs, le corps 18 du dispositif indicateur 16 adopte une position saillante par rapport aux capots 6 et 8, cette position le rendant facilement visible par un opérateur se situant à proximité du moteur, de manière à l'avertir d'un défaut de fermeture. Notons que la seconde partie 18b du corps 18 peut également comprendre des moyens aptes à accroître sa visibilité. A titre d'exemple, on peut citer une peinture de couleur vive ou l'adjonction d'un fanion.

La seconde partie 18b du corps 18 pend à présent de façon visible sous le moteur et sensiblement perpendiculairement au sol, et indique au personnel au sol que les différents mécanismes de verrouillage 14 n'ont pas encore été vérifiés, ou qu'ils n'ont tout simplement pas encore été actionnés. Par conséquent, tant que les différents mécanismes de verrouillage 14 n'ont pas été actionnés, la seconde partie 18b du corps 18 du dispositif indicateur 16 occupe sa position saillante d'avertissement, signalant que l'avion n'est pas en mesure d'effectuer un vol.

Ainsi, l'opérateur se doit d'actionner l'ensemble des mécanismes de verrouillage 14 se situant entre le capot gauche 6 et le capot droit 8.

Lorsque les mécanismes 14 ont été actionnés par l'opérateur, on fait subir au corps 18 un déplacement de sa position saillante vers une position escamotée, cette dernière position correspondant à une position dans laquelle un vol de l'avion est réalisable, et traduisant l'absence d'un défaut quelconque de fermeture des différents mécanismes de verrouillage 14.

Lorsque le corps 18 est dans une position escamotée par rapport aux capots 6 et 8, la première partie 18a de ce corps 18 recouvre totalement chacun des mécanismes de verrouillage 14, et est en appui contre les deux capots 6 et 8. Bien entendu, sans sortir du cadre de l'invention, la première partie 18a du corps 18 pourrait être conçue afin de ne recouvrir que partiellement chacun de ces mécanismes de verrouillage 14, lorsque ce corps 18 occupe sa position escamotée.

C'est ainsi que lorsqu'au moins un de ces mécanismes de verrouillage 14 n'est pas encore ou pas correctement actionné, la première partie 18a du corps 18 vient, lors d'un déplacement du corps 18 de sa position saillante vers sa position escamotée, buter contre le ou les mécanisme(s) non actionné(s).

En d'autre termes, la position escamotée du corps 18 du dispositif indicateur 16 est exclusivement autorisée lorsque chaque mécanisme de verrouillage 14 directement associé au dispositif indicateur 16 est actionné. Naturellement, on entend par mécanisme de verrouillage 14 directement associé, les mécanismes 14 pour lesquels le dispositif indicateur 16 s'applique, à savoir les mécanismes 14 susceptibles d'être au moins partiellement recouverts par le corps 18 de ce dispositif 16, car comme il a déjà été signalé, le dispositif indicateur 16 pourrait ne s'appliquer qu'à un nombre restreint de mécanismes 14 interposés entre les capots 6 et 8.

Le fait que le corps 18, et plus spécifiquement la première partie 18a de ce corps 18, vienne en butée contre le ou les mécanisme(s) non actionné(s), permet d'interdire la fixation du dispositif indicateur 16 sur le capot gauche 6. L'opérateur est alors alerté de l'existence d'un défaut de fermeture sur au moins l'un des mécanismes de verrouillage 14 recouvert par la première partie 18b du corps 18. L'opérateur est alors amené à remédier à l'ensemble des défauts présents pour pouvoir fixer le corps 18 à l'aide des moyens de fermeture 22 et 24.

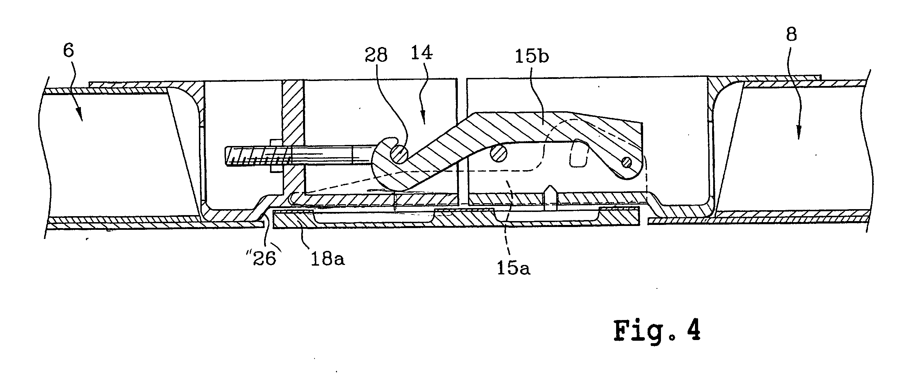

En référence à la figure 4, on voit un mécanisme de verrouillage 14 traditionnellement utilisé sur un moteur d'avion entre les deux capots de soufflante 6 et 8, ce mécanisme 14 comprenant une poignée 15a (représentée en pointillés) articulée sur le capot droit 8, et portant un crochet articulé 15b. Sur la figure 4, le mécanisme de verrouillage 14 est représenté dans sa configuration actionnée. Dans une telle position, la poignée 15a est totalement rabattue, de sorte qu'elle ne fasse pas saillie hors d'un logement (non représenté) dans lequel elle est destinée à reposer. De plus, lorsque le mécanisme de verrouillage 14 est actionné, le crochet 15b coopère avec une mortaise 28 située sur le capot gauche 6, et la poignée 15a repose dans sa position la plus rabattue possible à l'intérieur de son logement.

La première partie 18a du corps 18 est apte à prendre place, lorsque le corps 18 est en position escamotée, dans un renfoncement 26 créé dans les capots 6 et 8, de manière à assurer une continuité des surfaces extérieures des capots 6 et 8 et du corps 18 du dispositif indicateur 16.

Le renfoncement 26 et l'épaisseur de la première partie 18a du corps 18 sont spécialement adaptés de sorte que lorsque la poignée 15a n'est pas totalement rabattue à l'intérieur de son logement, elle fait saillie dans le renfoncement 26, et constitue par conséquent une butée pour le corps 18 du dispositif indicateur 16 lors d'un déplacement de sa position saillante vers sa position escamotée.

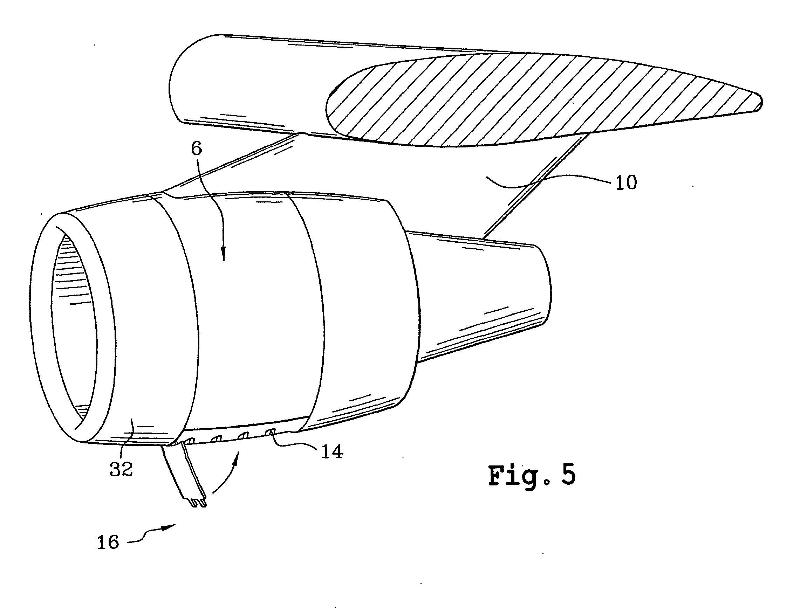

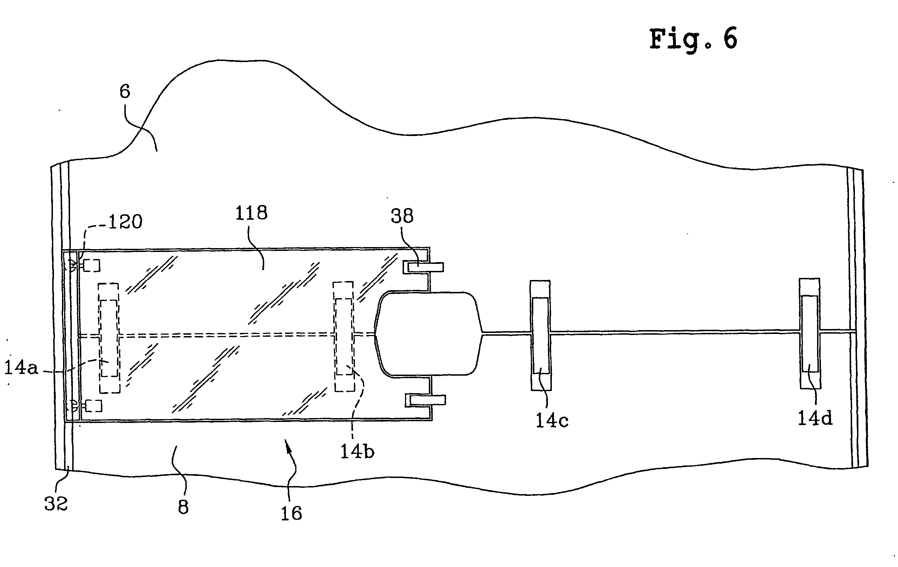

Selon un second mode de réalisation préféré de l'invention et en référence aux figures 5 et 6, on voit un dispositif indicateur 16 de défaut de fermeture de moyens de verrouillage constitués d'une pluralité de mécanismes de verrouillage 14 interposés entre un capot de soufflante gauche 6 et un capot de soufflante droit 8 de la nacelle 1. Plus précisément, dans ce second mode de réalisation préféré de l'invention, le dispositif indicateur 16 s'applique uniquement à deux des quatre mécanismes de verrouillage constituant les moyens de verrouillage des capots 6 et 8 de la nacelle 1. En référence à la figure 6, le dispositif indicateur 16 s'applique aux deux mécanismes de verrouillage 14a et 14b, tandis que les deux autres mécanismes de verrouillage 14c et 14d sont exempts de tout contrôle. Par conséquent, lorsqu'ils ne sont pas ou mal actionnés, les mécanismes 14c et 14d ne provoquent pas d'avertissement de défaut de fermeture.

En effet, dans le second mode de réalisation préféré, il a été estimé que deux mécanismes de verrouillage 14a,14b correctement actionnés suffisaient pour éviter que les capots 6 et 8 ne s'arrachent pendant un vol de l'avion, à cause des efforts générés dus à un écoulement aérodynamique sur les capots 6 et 8.

Le dispositif indicateur 16 comprend un corps 118 de forme sensiblement rectangulaire dont le côté le plus long s'étend dans une direction parallèle à l'axe longitudinal du moteur. D'autre part, le corps 118 du dispositif 16 prend préférentiellement le forme d'une simple plaque de faible épaisseur.

Le dispositif indicateur 16 est muni de charnières 120 ou d'éléments analogues permettant de monter de manière librement articulée le corps 118 sur une partie externe aux capots 6 et 8. Il peut s'agir, comme cela est représenté sur les figures 5 et 6, de l'entrée d'air 32 du moteur. Notons que les charnières 120 sont fixées sur l'entrée d'air 32 du moteur, l'axe de ces charnières 120 étant sensiblement perpendiculaire à l'axe longitudinal du moteur.

Le dispositif indicateur 16 comprend également des moyens de fermeture 38, ces moyens de fermeture étant susceptibles de solidariser le corps 118 avec au moins l'un des capots de soufflante 6 et 8, et de préférence avec les deux. Ces moyens de fermeture 38 sont identiques aux moyens de fermeture 22,24, décrits ci-dessus, dans le premier mode de réalisation préféré de l'invention.

Le dispositif indicateur 16 selon le second mode de réalisation préféré de l'invention est apte à fonctionner d'une manière similaire à celle du dispositif indicateur selon le premier mode de réalisation préféré de l'invention.

Pour ces raisons, il convient uniquement d'indiquer que la seule différence notoire entre les deux modes de réalisation préférés de l'invention réside dans la structure des corps 18 et 118 du dispositif indicateur 16. En effet, alors que le corps 18 utilisé dans le premier mode de réalisation préféré dispose de deux parties distinctes 18a et 18b, le corps 118 utilisé dans le second mode de réalisation préféré est destiné d'une part à recouvrir les mécanismes de verrouillage 14a et 14b lorsque le corps 118 est dans sa position escamotée, et d'autre part à avertir d'un défaut de fermeture lorsque le corps 118 est dans sa position saillante. Le corps 118, assurant une double fonction, voit ainsi sa structure simplifiée par rapport à la structure du corps 18 du premier mode de réalisation préféré de l'invention.

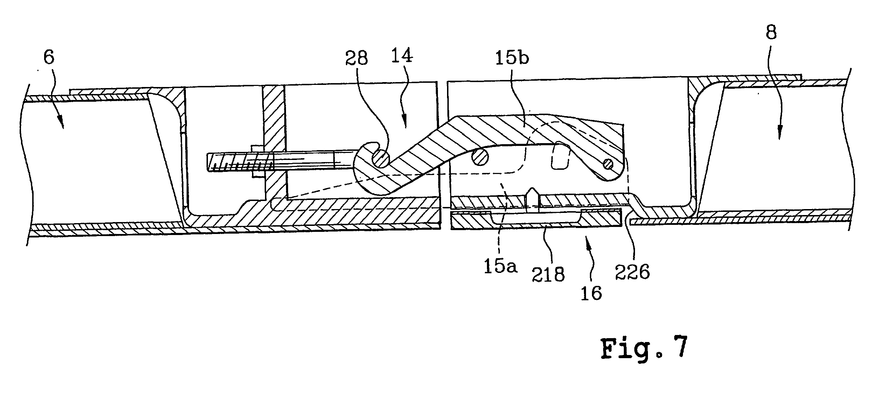

Selon un troisième mode de réalisation préféré de l'invention et en référence à la figure 7, le dispositif indicateur 16 comprend un corps 218, indifféremment articulé sur l'un des capots 6,8 ou sur une partie externe aux capots de soufflante 6 et 8, comme cela est respectivement décrit dans les premier et second modes de réalisation préférés de l'invention. De même, le corps 218 peut recouvrir un nombre déterminé de mécanismes de verrouillage 14, ce nombre pouvant varier de deux à la totalité des mécanismes 14 présents entre les deux capots 6 et 8.

Comme on peut le voir sur la figure 7, le corps 218, correspondant au corps 18a du premier mode de réalisation et au corps 118 du second mode de réalisation, coopère avec un seul des capots 6 et 8, et recouvre uniquement partiellement chaque mécanisme de verrouillage 14. De ce fait, un seul des capots gauche 6 et droit 8 doit être adapté pour recevoir le corps 218 du dispositif indicateur 16, afin de lui permettre d'occuper sa position escamotée. Notons que l'unique capot 8 concerné présente un renfoncement 226 dont les dimensions sont prévues pour que la poignée 15a du mécanisme 14 constitue une butée pour le corps 218, lors d'un déplacement de sa position saillante vers sa position escamotée, et lorsque le mécanisme 14 n'a pas été actionné.

Bien entendu, diverses modifications peuvent être apportées par l'homme du métier aux dispositifs indicateur 16 qui viennent d'être décrits, uniquement à titre d'exemples non limitatifs, sans sortir ainsi de la portée de l'invention comme revendiquée dans les revendications annexées.

## Revendications

1. Nacelle (1) de moteur d'avion comprenant deux capots de soufflante (6, 8) équipés de moyens de verrouillage constitués d'une pluralité de mécanismes de verrouillage (14, 14a, 14b) ainsi que d'un dispositif indicateur (16) de défaut de fermeture desdits moyens de verrouillage (14,14a,14b), ledit dispositif indicateur (16) comprenant un corps (18,118,218) apte à occuper, par rapport auxdits capots (6,8), une position escamotée ainsi qu'une position saillante avertissant d'un défaut de fermeture, le corps (18,118,218) du dispositif indicateur (16) est destiné à recouvrir au moins partiellement au moins deux mécanismes de verrouillage (14,14a,14b) lorsqu'il occupe sa position escamotée, et en ce que chacun des mécanismes de verrouillage (14, 14a, 14b) destiné à être au moins partiellement recouvert par le corps (18, 118, 218) du dispositif indicateur (16) dispose d'une poignée (15a) constituant une butée pour le corps (18, 118, 218) lors d'un déplacement de sa position saillante vers sa position escamotée, tant que cette poignée (15a) n'est pas dans une position totalement rabattue occupée lorsque le mécanisme de verrouillage (14, 14a, 14b) est actionné, de sorte que ladite position escamotée soit exclusivement autorisée lorsque chaque mécanisme de verrouillage (14,14a,14b) destiné à être au moins partiellement recouvert par le corps (18,118,218) du dispositif indicateur (16) est actionné.

2. Nacelle (1) selon la revendication 1 **caractérisée en ce que** dans sa position escamotée, ledit corps (18,118,218) du dispositif indicateur (16) recouvre au moins partiellement chacun des mécanismes de verrouillage (14,14a,14b) constituant les moyens de verrouillage, et est en appui contre au moins un desdits deux capots (6,8).

3. Nacelle (1) selon l'une quelconque des revendications précédentes, **caractérisée en ce que** ledit corps (18) du dispositif indicateur (16) est monté de manière librement articulée à une extrémité de l'un desdits deux capots (6,8).

4. Nacelle (1) selon la revendication 3, **caractérisée en ce que** le dispositif indicateur (16) comprend des moyens de fermeture (22,24) aptes à fixer ledit corps (18) du dispositif indicateur (16) sur l'autre desdits deux capots (6,8).

5. Nacelle (1) selon l'une quelconque des revendications précédentes, **caractérisée en ce que** ledit corps (18) du dispositif indicateur (16) comprend une première partie (18a) destinée à recouvrir chacun des mécanismes de verrouillage (14) constituant les moyens de verrouillage lorsque ledit corps (18) du dispositif indicateur (16) est dans sa position escamotée, et une seconde partie (18b) destinée à avertir d'un défaut de fermeture lorsque ledit corps (18) du dispositif indicateur (16) est dans sa position saillante.

6. Nacelle (1) selon l'une quelconque des revendications 1 à 2, **caractérisée en ce que** ledit corps (118) du dispositif indicateur (16) est monté de manière librement articulée sur une partie externe (32) auxdits deux capots (6,8).

7. Nacelle (1) selon la revendication 6, **caractérisée en ce que** le dispositif indicateur (16) comprend des moyens de fermeture (38) aptes à fixer ledit corps (118) du dispositif indicateur (16) sur au moins l'un desdits deux capots (6,8).

8. Nacelle (1) selon la revendication 6 ou la revendication 7, **caractérisée en ce que** ledit corps (118) du dispositif indicateur (16) est destiné d'une part à recouvrir chacun des mécanismes de verrouillage (14a,14b) constituant les moyens de verrouillage lorsque ledit corps (118) du dispositif indicateur (16) est dans sa position escamotée, et d'autre part à avertir d'un défaut de fermeture lorsque ledit corps (118) du dispositif indicateur (16) est dans sa position saillante.

9. Nacelle (1) selon l'une quelconque des revendications précédentes, **caractérisée en ce que** le corps (18,118,218) du dispositif indicateur (16) comprend des moyens aptes à accroître sa visibilité.

10. Nacelle (1) selon l'une quelconque des revendications précédentes, **caractérisée en ce que** chacun des mécanismes de verrouillage (14,14a,14b) destiné à être au moins partiellement recouvert par le corps (18,118,218) du dispositif indicateur (16) comprend une poignée (15a) manoeuvrable entraînant un crochet (15b).

11. Nacelle (1) selon la revendication 10, **caractérisée en ce que** le corps (18,118,218) du dispositif indicateur (16) est apte à recouvrir un nombre prédéterminé supérieur ou égal à deux de mécanismes de verrouillage (14,14a,14b), ledit nombre prédéterminé de mécanismes de verrouillage (14,14a,14b) étant suffisant pour reprendre les efforts générés lors d'un écoulement aérodynamique rencontré en situation de vol.

## Patentansprüche

1. Flugzeugtriebwerkverkleidung (1) mit zwei Strahldüsenhauben (6,8), die mit aus mehreren Verriegelungsmechanismen (14,14a,14b) sowie aus einer Anzeigevorrichtung (16) eines Schließfehlers der Verriegelungsmittel (14,14a,14b) gebildeten Verriegelungsmitteln versehen sind, wobei die Anzeigevorrichtung (16) einen Körper (18,118,218) umfasst, der in Bezug auf die Hauben (6,8) eine zurückgezogene Position sowie eine über einen Schließfehler informierende vorstehende Position einnehmen kann, wobei der Körper (18,118,218) der Anzeigevorrichtung (16) dazu bestimmt ist, mindestens teilweise mindestens zwei Verriegelungsmechanismen (14,14a,14b) zu bedecken, wenn er seine zurückgezogene Position einnimmt, und dass jeder der Verriegelungsmechanismen (14,14a,14b), der mindestens teilweise von dem Körper (18,118,218) der Anzeigevorrichtung (16) bedeckt ist, über einen Handgriff (15a) verfügt, der einen Anschlag für den Körper (18,118,218) bei der Bewegung von seiner vorstehenden Position zu seiner zurückgezogenen Position bildet, solange sich dieser Handgriff (15a) nicht in einer vollkommen niedergedrückten Position befindet, die er einnimmt, wenn der Verriegelungsmechanismus (14,14a,14b) betätigt wird, so dass die zurückgezogene Position nur dann zugelassen wird, wenn jeder Verriegelungsmechanismus (14,14a,14b), der zumindest teilweise von dem Körper (18,118,218) der Anzeigevorrichtung (16) bedeckt ist, betätigt wird.

2. Verkleidung (1) nach Anspruch 1, **dadurch gekennzeichnet, dass** der Körper (18,118,218) der Anzeigevorrichtung (16) in seiner zurückgezogenen Position mindestens teilweise jeden der Verriegelungsmechanismen (14,14a,14b), welche die Verriegelungsmittel bilden, bedeckt, und an mindestens einer der beiden Hauben (6,8) anliegt.

3. Verkleidung (1) nach einem der vorangehenden Ansprüche, **dadurch gekennzeichnet, dass** der Körper (18) der Anzeigevorrichtung (16) frei dreh-/schwenkbar an einem Ende einer der beiden Hauben (6,8) angebracht ist.

4. Verkleidung (1) nach Anspruch 3, **dadurch gekennzeichnet, dass** die Anzeigevorrichtung (16) Schließmittel (22,24) umfasst, welche den Körper (18) der Anzeigevorrichtung (16) an der anderen der beiden Hauben (6,8) feststellen kann.

5. Verkleidung (1) nach einem der vorangehenden Ansprüche, **dadurch gekennzeichnet, dass** der Körper (18) der Anzeigevorrichtung (16) einen ersten Abschnitt (18a) umfasst, der jeden der die Verriegelungsmittel bildenden Verriegelungsmechanismen (14) bedeckt, wenn sich der Körper (18) der Anzeigevorrichtung (16) in seiner zurückgezogenen Position befindet, und einen zweiten Abschnitt (18b), der über einen Schließfehler informiert, wenn sich der Körper (18) der Anzeigevorrichtung (16) in seiner vorstehenden Position befindet.

6. Verkleidung (1) nach einem der Ansprüche 1 oder 2, **dadurch gekennzeichnet, dass** der Körper (118) der Anzeigevorrichtung (16) frei dreh-/schwenkbar an einem äußeren Abschnitt (32) an den beiden Hauben (6,8) angebracht ist.

7. Verkleidung (1) nach Anspruch 6, **dadurch gekennzeichnet, dass** die Anzeigevorrichtung (16) Schließmittel (38) umfasst, welche den Körper (118) der Anzeigevorrichtung (16) an mindestens einer der beiden Hauben (6,8) feststellen können.

8. Verkleidung (1) nach Anspruch 6 oder Anspruch 7, **dadurch gekennzeichnet, dass** der Körper (118) der Anzeigevorrichtung (16) einerseits jeden der die Verriegelungsmittel bildenden Verriegelungsmechanismen (14a,14b) bedeckt, wenn der Körper (118) der Anzeigevorrichtung (16) sich in der zurückgezogenen Position befindet, und andererseits einen Schließfehler anzeigt, wenn sich der Körper (118) der Anzeigevorrichtung (16) in seiner vorstehenden Position befindet.

9. Verkleidung (1) nach einem der vorhergehenden Ansprüche, **dadurch gekennzeichnet, dass** der Körper (18,118,218) der Anzeigevorrichtung (16) Mittel umfasst, die seine Sichtbarkeit verbessern können.

10. Verkleidung (1) nach einem der vorangehenden Ansprüche, **dadurch gekennzeichnet, dass** jeder der Verriegelungsmechanismen (14,14a,14b), der zumindest teilweise vom Körper (18,118,218) der Anzeigevorrichtung (16) bedeckt ist, einen betätigbaren, einen Haken (15b) mitführenden Handgriff (15a) umfasst.

11. Verkleidung (1) nach Anspruch 10, **dadurch gekennzeichnet, dass** der Körper (18,118,218) der Anzeigevorrichtung (16) eine vorbestimmte Anzahl größer oder gleich zwei von Verriegelungsmechanismen (14,14a,14b) bedecken kann, wobei die vorbestimmte Anzahl von Verriegelungsmechanismen (14,14a,14b) ausreicht, um die Kräfte aufzunehmen, die bei einer in einer Flugsituation anzutreffenden aerodynamischen Strömung erzeugt werden.

## Claims

1. Aircraft engine nacelle (1) comprising two fan cowlings (6, 8) equipped with locking means constituted by a plurality of locking mechanisms (14, 14a 14b), as well as a device (16) indicating a defective closure of said locking means (14, 14a, 14b), said indicating device (16) comprising a body (18, 118, 218) able to occupy, with respect to said cowlings (6, 8), a retracted position and a projecting position warning of a defective closure, the body (18, 118, 218) of said indicating device (16) serving to at least partly cover at least two locking mechanisms (14, 14a, 14b) when it occupies its retracted position and each of the locking mechanisms (14, 14a, 14b) intended to be at least partly covered by the body (18, 118, 218) of the indicating device (16) having a handle (15a) constituting an abutment for the body (18, 1-18, 218) during a displacement from its projecting position to its retracted position when said handle (15a) is not in a completely turned down position when the locking mechanism (14, 14a, 14b) is actuated, so that said retracted position is exclusively authorized when each locking mechanism (14, 14a, 14b) intended to be at least partly covered by the body (18, 118, 218) of the indicating device (16) is actuated.

2. Nacelle (1) according to claim 1, **characterized in that** in its retracted position, said body (18, 118, 218) of the indicating device (16) at least partly covers each of the locking mechanism (14, 14a, 14b) constituting the locking means and bears against at least one of said two cowlings (6, 8).

3. Nacelle (1) according to either of the preceding claims, **characterized in that** said body (18) of the indicating device (16) is mounted in such a way as to be freely articulated at one end of one of said two cowlings (6, 8).

4. Nacelle (1) according to claim 3, **characterized in that** the indicating device (16) comprises closure means (22, 24) able to fix said body (18) of the indicating device (16) on the other of said two cowlings (6, 8).

5. Nacelle (1) according to any one of the preceding claims, **characterized in that** said body (18) of the indicating device (16) comprises a first part (18) intended to cover each of the locking mechanisms (14) constituting the locking means when said body (18) of the indicating device (16) is in its retracted position, and a second part (18b) for warning of a closure fault when said body (18) of the indicating device (16) is in it projecting position.

6. Nacelle (1) according to either of the claims 1 and 2, **characterized in that** said body (118) of indicating device (16) is mounted in freely articulated manner on an external part (32) with respect to said two cowlings (6, 8).

7. Nacelle (1) according to claim 6, **characterized in that** the indicating device (16) comprises closure means (38) able to fix said body (118) of indicating device (16) on at least one of said two cowlings (6, 8).

8. Nacelle (1) according to claim 6 or 7, **characterized in that** said body (118) of indicating device (16) is intended on the one hand to cover each of the locking mechanisms (14a, 14b) constituting the locking means when said body (118) of the indicating device (16) is in its retracted position and on the other hand warn of a closure defect when said body (118) of indicating device (16) is in its projecting position.

9. Nacelle (1) according to any one of the preceding claims, **characterized in that** the body (18, 118, 218) of the indicating device (16) comprises means able to increase its visibility.

10. Nacelle (1) according to any one of the preceding claims, **characterized in that** each of the locking mechanisms (14, 14a, 14b) intended to be at least partly covered by the body (18, 118, 218) of the indicating device (16) comprises a manipulatable handle (15a) driving a hook (15b).

11. Nacelle (1) according to claim 10, **characterized in that** the body (18, 118, 218) of the indicating device (16) is able to cover a predetermined number exceeding or equal to two locking mechanisms (14, 14a, 14b), said predetermined number of locking mechanisms (14, 14a, 14b) being adequate to take up the forces generated during an aerodynamic flow encountered in a flight situation.
